(19) Europäisches Patentamt
European Patent Office
Office européen des brevets

(11) Veröffentlichungsnummer : 0 281 838 B1

(12) # EUROPÄISCHE PATENTSCHRIFT

(45) Veröffentlichungstag der Patentschrift : **05.06.91 Patentblatt 91/23**

(51) Int. Cl.$^5$ : **C08G 65/32,** C07C 309/13, C07C 303/20, C08F 2/26

(21) Anmeldenummer : **88102672.8**

(22) Anmeldetag : **24.02.88**

(54) **Sulfosuccinamidsäuren von Polyoxypropylendiaminen und ihre Verwendung als Emulgatoren.**

Die Akte enthält technische Angaben, die nach dem Eingang der Anmeldung eingereicht wurden und die nicht in dieser Patentschrift enthalten sind.

(30) Priorität : **07.03.87 DE 3707439**

(43) Veröffentlichungstag der Anmeldung : **14.09.88 Patentblatt 88/37**

(45) Bekanntmachung des Hinweises auf die Patenterteilung : **05.06.91 Patentblatt 91/23**

(84) Benannte Vertragsstaaten : **DE FR GB IT**

(56) Entgegenhaltungen :
**EP-A- 0 196 596**
**FR-A- 2 376 131**
**US-A- 4 081 418**
**US-A- 4 231 912**

(73) Patentinhaber : **BAYER AG**
**W-5090 Leverkusen 1 Bayerwerk (DE)**

(72) Erfinder : **Hendricks, Udo-Winfried, Dr.**
**Am Höhenfeld 12**
**W-5068 Odenthal (DE)**
Erfinder : **Schmidt, Adolf, Dr.**
**Roggendorfstrasse 67**
**W-5000 Köln 80 (DE)**

EP 0 281 838 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind Sulfosuccinamidsäuren und ihre Salze der allgemeinen Formel

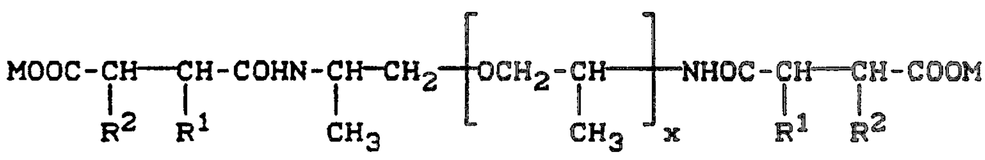

(I)

in der

x für eine Zahl von 5-60, vorzugsweise 20-40,

M für Wasserstoff, ein Alkalimetall, eine Ammonium-, $C_1$-$C_4$-Alkylammonium- oder $C_2$-$C_3$-Hydroxyalkylammonium-Gruppe und von den Resten

$R^1$ und $R^2$ der eine für Wasserstoff, der andere für $-SO_3M$ stehen.

Ein weiterer Gegenstand der Erfindung ist die Verwendung der Verbindungen der Formel (I) als Tenside und Emulgatoren in wäßrigen Systemen, beispielsweise bei der Emulsionspolymerisation oder Emulsions-Copolymerisation radikalisch polymerisierbarer und copolymerisierbarer Verbindungen. Beispiele für M sind Natrium, Kalium, Ammonium, Mono-, Di- oder Trimethylammonium, Mono-, Di- oder Tri-(hydroxyethyl)-ammonium und Mono- oder Di-(hydroxypropyl)-ammonium.

Den Verbindungen der Formel (I) ähnliche Emulgatoren, die zwei Sulfosuccinamidsäure-Gruppen aufweisen, sind aus EP-A-0 196 596 bekannt.

Die Verbindungen der Formel (I) können nach an sich bekannten Verfahren hergestellt werden, indem man Polyoxypropylendiamine der allgemeinen Formel

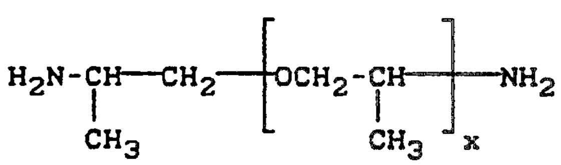

(II)

in der x die obengenannte Bedeutung hat, mit Maleinsäureanhydrid bei Temperaturen von 20° bis 120°C, vorzugsweise von 40° bis 70°C, im Molverhältnis von 1 : 1,9 bis 1 : 2,2, vorzugsweise 1 : 2, und gegebenenfalls in Anwesenheit inerter Lösungsmittel umsetzt und anschließend die erhaltenen Reaktionsprodukte in wäßrigem Medium mit Alkali- oder Ammonium-sulfiten zur Reaktion bringt.

Die Menge an Alkali- oder Ammoniumsulfit wird dabei so gewählt, daß pro Mol eingesetztes Maleinsäureanhydrid 0,95 bis 1,05 Mol Alkali- oder Ammoniumsulfit zur Anwendung gelangen.

Geeignete Lösungsmittel für die Umsetzung der Polyoxypropylendiamine der Formel (II) mit Maleinsäureanhydrid sind beispielsweise aliphatische oder aromatische Kohlenwasserstoffe, insbesondere Toluol und Xylol, aliphatische oder aromatische Halogenkohlenwasserstoffe, wie z.B. Methylenchlorid, Ethylenchlorid oder Chlorbenzol, Ester oder Ketone, wie z.B. Ethylacetat oder Aceton, und Ether, wie z.B. Tetrahydrofuran.

Vorzugsweise werden die Polyoxypropylendiamine in den Lösungsmitteln gelöst und das Maleinsäureanhydrid diesen Lösungen bei der gewählten Reaktionstemperatur zugesetzt.

Die Polyoxypropylendiamine der Formel (II) sind bekannt, ihre Herstellung kann beispielsweise durch dehydrierend/hydrierende Aminierung von Polyoxypropylenglykolen nach den in Houben-Weyl, Methoden der Organischen Chemie, 4. Auflage, Band XI/1, Seite 126 ff. oder in der DE-PS 1 215 373 beschriebenen Methoden erfolgen.

Geeignete Produkte werden beispielsweise unter der Bezeichnung JEFFAMINE D von Texaco Chemical Co., Houston, Texas, in den Handel gebracht.

Die Verbindungen der Formel I sind besonders als Emulgatoren der wäßrigen Emulsionspolymerisation geeignet. Sie verschlechtern die Eigenschaften der Polymerisate in geringerem Umfange als die üblichen

Emulgatoren. Da sie relativ zu diesen hochmolekular sind und eine recht gute Polymerisatverträglichkeit zeigen, können sie auch an Fertigteilen wie Folien oder Spritzgußteilen nicht so leicht ausschwitzen. Die Klarheit der Folien und ihr Foggingverhalten sind verbessert.

Auch die Entfernung von Restmonomeren aus den Polymerlatices ist vereinfacht, denn die Verbindungen der Formel I bilden im Gegensatz zu herkömmlichen Emulgatoren keine stabilen Schaumlamellen.

Zur Polymerisation in Gegenwart der erfindungsgemäßen Emulgatoren können die üblichen Monomeren wie Butadien, Styrol, Acrylester, Methacrylester, Vinylester, Vinylhalogenide wie Vinylchlorid, Chloropren, Ethylen eingesetzt werden. Copolymere der genannten Monomeren mit Methylstyrol, Acrylnitril, Methacrylnitril können ebenfalls erfindungsgemäß in Emulsion hergestellt werden.

Die Emulsionspolymerisation kann diskontinuierlich nach Zulaufverfahren oder kontinuierlich erfolgen.

Besonders bevorzugt werden erfindungsgemäß Polymerisate des Butadiens, Copolymerisate des Butadiens mit Styrol oder mit Acrylnitril, Styrol-Acrylat-Copolymerisatdispersionen und Acrylnitril-Acrylat-Copolymerisatdispersionen, hergestellt.

Falls erwünscht, können zur Verbesserung der Stabilität der Dispersionen gegen Elektrolytzusätze sowie zur Verbesserung der Haftung und deren Verdickbarkeit neben den genannten Monomeren noch Acrylsäure, Methacrylsäure, Itaconsäure, Maleinsäure und ihre Halbester, Vinylsulfonsäure, Methallylsulfonsäure in Mengen bis 10 Gew.-% in die Polymerisate eingebaut werden.

In den folgenden Beispielen sind Teile immer Gewichtsteile, falls nicht anders vermerkt.

Beispiel 1

600 Teile eines Polyoxypropylendiamins der Formel

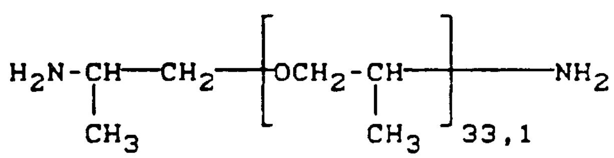

(III)

das von Texaco Inc. unter dem Handelsnamen JEFFAMINE D-2000 vertrieben wird, wurden in 600 Teilen Toluol gelöst und bei 40° bis 45°C portionsweise mit 60 Teilen Maleinsäureanhydrid versetzt. Anschließend wurde 1 Stunde bei 70° bis 80°C gerührt und danach durch Eindampfen im Vakuum bei 60° bis 70°C vom Toluol befreit. Es hinterblieben 661 Teile eines viskosen Rückstandes mit einer Säurezahl von 52,5 mg KOH/g.

Der Rückstand wurde mit 1200 Teilen Wasser und 80 Teilen Natriumsulfit versetzt und 8 Stunden bei 70° bis 80°C gerührt, bis der Sulfitgehalt auf 0,26% gesunken war. Der Gehalt an anorganischem Sulfat lag unter 0,3%.

Man erhielt eine klare viskose Lösung mit einem Feststoffgehalt von 38,3%, die sich in Wasser klar löste.

Beispiel 2

100 Teile eines Polyoxypropylendiamins der Formel

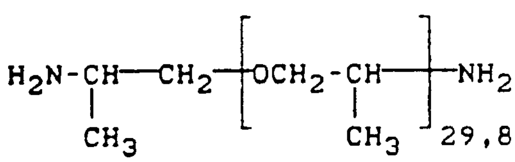

(IV)

wurden in 200 Teilen Toluol gelöst und bei 30 bis 35°C mit 11 Teilen Maleinsäureanhydrid versetzt. Anschließend wurde 1 Stunde bei 70° bis 80°C gerührt und danach im Vakuum bei 60° bis 70°C das Lösemittel abdestilliert. Man erhielt 111 Teile Rückstand mit einer Säurezahl von 62,0 g KOH/g.

Der Rückstand wurde mit 200 Teilen Wasser und 16,4 Teilen Natriumsulfit versetzt und 6 Stunden bei 70° bis 80°C gerührt, bis der Sulfitgehalt auf 0,23% gesunken war. Man erhielt eine klare viskose Lösung mit einem

Feststoffgehalt von 38%.

Beispiel 3

288 Teile eines Polyoxypropylendiamins der Formel

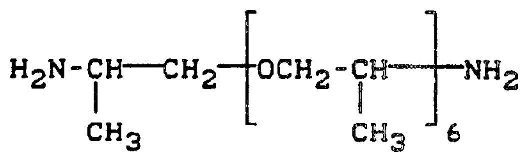

(V)

wurden in 280 Teilen Toluol gelöst und portionsweise mit 134 Teilen Maleinsäureanhydrid bei 50° bis 60°C versetzt. Nach einstündigem Rühren bei 70° bis 80°C wurde das Toluol im Vakuum bei 70° bis 80°C abdestilliert. Man erhielt 423 Teile eines viskosen Rückstands mit einer Säurezahl von 185,1 mg KOH/g.

Der Rückstand wurde bei 60° bis 70°C mit einer Lösung von 176 Teilen Natriumsulfit in 800 Teilen Wasser versetzt und anschließend bei 80° bis 95°C 5 Stunden gerührt. Man erhielt eine klare viskose Lösung mit einem Trockengehalt von 43,6% mit einem Sulfitgehalt von 0,04% und einem Gehalt an anorganischem Sulfat von weniger als 0,03%.

Beispiel 4

300 Teile eines Polyoxypropylendiamins der Formel

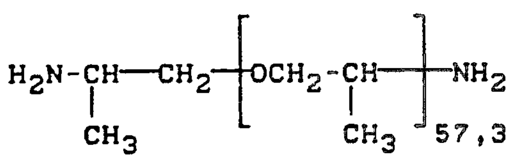

(VI)

wurden in 280 Teilen Toluol gelöst und bei 30° bis 35°C mit 19,6 Teilen Maleinsäureanhydrid versetzt. Nach einstündigem Rühren bei 70° bis 80°C wurde das Lösemittel im Vakuum bei 60° bis 70°C entfernt. Man erhielt 320 Teile Rückstand mit einer Säurezahl von 35,1 mg KOH/g.

Der Rückstand wurde mit 300 Teilen Wasser und 157 Teilen Isopropanol versetzt, dann wurden bei 70° bis 80°C 27,7 Teile Natriumsulfit, gelöst in 220 Teilen Wasser, unter gutem Rühren zugesetzt. Nach achtstündigem Rühren bei 70° bis 80°C erhielt man eine klare, viskose Lösung mit einem Feststoffgehalt von 33,7%. Der Sulfitgehalt betrug 0,01%.

Das Isopropanol wurde vor der Polymerisation aus der Lösung entfernt. Es hinterblieb eine trübe feinteilige Emulgatoremulsion.

Beispiel 5

500 Teile eines Polyoxypropylendiamins der Formel

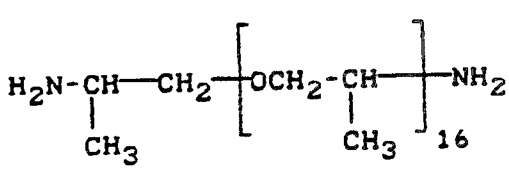

(VII)

wurden in 170 Teile Toluol gelöst und bei 40° bis 60°C mit 98 Teilen Maleinsäureanhydrid versetzt. Nach einstündigem Rühren bei 70° bis 80°C wurde das Lösemittel im Vakuum bei 60° bis 70°C entfernt. Man erhielt 599 Teile Rückstand mit einer Säurezahl von 100,9 mg KOH/g.

Der Rückstand wurde bei 70° bis 80°C mit einer Lösung von 145 Teilen Natriumsulfit in 900 Teilen Wasser versetzt und bei 70° bis 80°C 8 Stunden gerührt. Man erhielt eine klare, viskose Lösung mit einem Feststoffgehalt von 45,1% ; der Sulfitgehalt betrug 0,5%.

## Beispiel 6

Die nach Beispiel 1 hergestellte Verbindung der idealisierten Struktur :

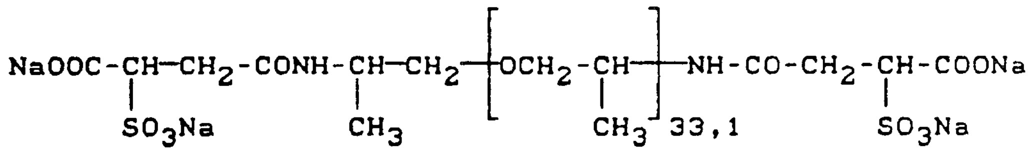

(VIII)

wird als Emulgator zur Emulsionspolymerisation des Butadiens (1, 3) verwendet.

In einen 6 Liter Edelstahlautoklaven mit automatischer Regelung der Innentemperatur über Außenkühlung bzw. Außenheizung und stufenlos regulierbarem Getriebe für einen Blattrührer werden unter Ausschluß von Luftsauerstoff eingebracht (Mengen in g) :

| | |
|---|---|
| Entionisiertes Wasser | 2032,00 g |
| KOH fest | 1,78 g |
| 10 gew.-%ige wäßrige Lösung der Verbindung (VIII) | 546,60 g |
| Tert. Dodecylmercaptan | 5,70 g |
| Butadien | 1832,0 |

Das Gemisch wird auf 65°C aufgeheizt und nach Erreichen der Temperatur wird die Polymerisation durch Zugabe von 2,5%iger wäßriger Kaliumperoxodisulfatlösung 171,5 gestartet. Rührgeschwindigkeit 150 Umdrehungen pro Minute.

Die Polymerisation zeigte folgenden Zeit-Feststoffgehaltsverlauf :

| Zeit [h] | Feststoffgehalt Latex [Gew.-%] |
|---|---|
| 1 | 5,2 |
| 2 | 8,1 |
| 3 | 11,1 |
| 4 | 14,2 |
| 5 | 19,0 |
| 6 | 24,0 |
| 7 | 28,5 |
| 8 | 32,1 |
| 12 | 38,2 |
| 14 | 40,1 |

Unter Feststoffgehalt wird der Trockenrückstand von 100 Gew.-Teilen einer dem Autoklaven entnommenen und monomerenfreien Latexprobe verstanden.

Bei der Polymerisation entsteht nur ca. 8 g Koagulat, welches nach Filtrieren durch ein Tuch mit einer Maschenweite von 200 Mikron zurückbleibt. Der filtrierte Latex ist stippenfrei, hat einen Feststoffgehalt von ca. 40% und läßt sich problemlos durch Vakuumdestillation entmonomerisieren, da er hierbei nicht schäumt. Der Latexteilchendurchmesser beträgt ca. 100 nm.

Beispiel 7

Der nach Beispiel 2 hergestellte Emulgator der idealisierten Struktur :

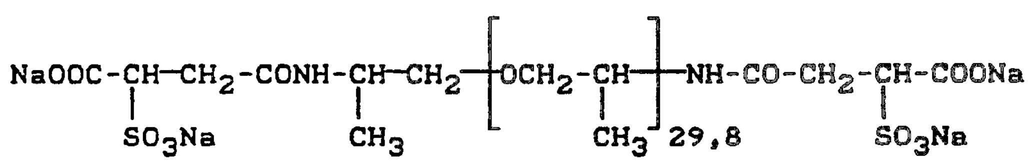

(IX)

wird nach der in Beispiel 6 angegebenen Rezeptur zur Emulsionspolymerisation des Butadiens verwendet.

Die Polymerisationsbedingungen sind die gleichen.

Bei der Polymerisation wurde folgender Zeit-Feststoffgehaltszusammenhang beobachtet :

| Zeit (h) | Feststoffgehalt Latex (%) |
|---|---|
| 1 | 5,0 |
| 2 | 7,5 |
| 3 | 10,5 |
| 4 | 15,5 |
| 5 | 20,5 |
| 6 | 23,5 |
| 8 | 32,5 |
| 10 | 37,5 |
| 12 | 40,0 |

Im Latex und an den Autoklavenwänden befand sich kein Koagulat. Der Latexteilchendurchmesser wurde nephelometrisch gemessen und ergab sich zu ca. 100 nm. Nach der Entmonomerisierung durch Vakuumdestillation, bei welcher 10% des im Latex enthaltenden Wassers abdestilliert und durch destilliertes Wasser ergänzt wurden, hatte der Latex einen Feststoffgehalt von 40,6%, einen pH-Wert von 11, eine Auslaufzeit nach DIN 53 211 (Auslaufbecher mit 4 mm Durchmesser) von 17 sec. Bei der Entmonomerisierung, welche ohne Schaumbildung verlief, wurde praktisch kein Koagulat gebildet.

Beispiel 8

Der nach Beispiel 3 hergestellte Emulgator der idealisierten Struktur :

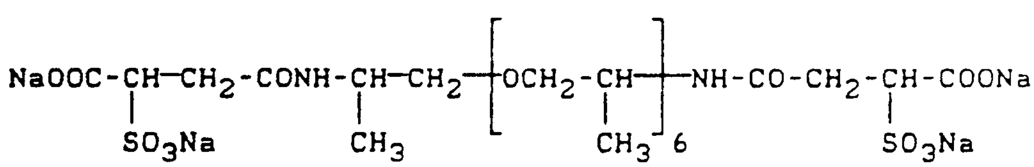

(X)

wird nach der in Beispiel 4 angegebenen Rezeptur zur Emulsionspolymerisation des Butadiens verwendet.

Die Polymerisationsbedingungen sind die gleichen.

Folgender Feststoffgehalt-Zeit-Zusammenhang wurde dabei beobachtet :

| Zeit (h) | Feststoffgehalt (%) |
|---|---|
| 5 | 3,5 |
| 8 | 4,5 |
| 11 | 6,5 |
| 14 | 9,5 |
| 19 | 13,0 |
| 22 | 15,0 |
| 26 | 17,5 |
| 29 | 19,5 |
| 32 | 21,0 |
| 35 | 22,5 |
| 40 | 26,5 |
| 45 | 29,5 |
| 54 | 33,0 |
| 62 | 36,5 |
| 73 | 40,3 |

Nach dem Entmonomerisieren lag der Feststoffgehalt bei 40,4%, die Auslaufzeit nach DIN 53211 (4 mm Düse) bei 12 sec, der Teilchendurchmesser betrug ca. 300 nm. Während der Polymerisation und der Entmonomerisierung entstand nur wenig Koagulat.

Beispiel 9

500 ml Glasgefäße werden mit den in Tabelle 1 angegebenen Mengen an Wasser, Styrol oder n-Butylacrylat und an Emulgatorlösung gemäß Beispiel 2 und Sodalösung gefüllt.

Die Gemische werden auf 70°C aufgeheizt, geschüttelt oder gerührt. Nach Erreichen und Konstantsein der Temperatur wird die Kaliumpersulfatlösung zugegeben.

Nach 7 Stunden sind die Polymerisationen beendet. Der Feststoffgehalt, die Koagulatmenge, der pH-Wert und die Teilchendurchmesser werden bestimmt. Die Ergebnisse sind in Tabelle 1 zusammengestellt.

Beispiel 10

Der gemäß Beispiel 6 hergestellte, entmonomerisierte Latex wird unter Zugabe von etwas destilliertem Wasser auf einen Feststoffgehalt von 40 Gew.-% eingestellt.

Ein mit Hilfe von Kaliumpersulfat als Initiator und mit Hilfe von Natriumdresinate als Emulgator entsprechend hergestellter Latex (40%ig) des Latexteilchendurchmessers ca. 100 nm GB-1 wird zum Vergleich herangezogen.

Glasplatten werden mit Hilfe einer Lackhantel mit 90 Mikron Naßfilmschichtdicke aus obigen Latices auf Basis unterschiedlicher Emulgatoren, vergleichbarer Aktivatormenge und Teilchengröße beschichtet und der Naßfilm bei Raumtemperatur getrocknet. Anschließend werden die Klarfilme im Umluftschrank bei 150°C getrocknet und ihre Verfärbung wird mit Hilfe von Farbscheiben der Fa. Hellige GmbH, Freiburg i.Br. bestimmt (Nr. 230 069 01).

Der Farbton der Farbscheiben wird mit denen der getrockneten Klarfilme gegen weißen Untergrund verglichen und der Film-Farbton einer bestimmten Hazen-Zahl zugeordnet.

Die Hazen Skala geht von farblos (0) bis orange-braun (150).

Prüfergebnis

| Erhitzungszeit (min) | 30 min | 60 min | 120 min |
|---|---|---|---|
| Latex gemäß Beispiel 5 | 0-5 | 10 | 25-30 |
| GB-1 Latex (Dresinate als Emulgator) Vergleich | 25-30 | 60-70 | 80-90 |

Tabelle 1 (zu Beispiel 9) ; Mengenangaben in [g]

| | | | |
|---|---|---|---|
| Entionisiertes Wasser | 181,5 | 181,5 | 171,2 |
| Styrol | 114,0 | - | - |
| n-Butylacrylat | - | 114,0 | 114,0 |
| Emulgator gemäß Beispiel 2, 10 %ig in $H_2O$ | 34,2 | 34,2 | 45,6 |
| 1 %ige wäßrige Kaliumperoxodisulfatlösung | 34,2 | → | → |
| 1 %ige wäßrige Natriumcarbonatlösung | 20,1 | → | → |
| Polymerisationstemperatur (°C) | 70 | → | → |
| Polymerisationsdauer (h) | 7 | → | → |
| Feststoffgehalt (%) | 29,1 | 30,3 | 30,5 |
| Koagulat (g) | 0,3 | 0,6 | 0,6 |
| pH-Wert | 8,3 | 6,3 | 6,4 |
| Latexteilchendurchmesser (nm) | 130 | 95 | 100 |

Beispiel 11·

Es wird die Wirkungsweise der Emulgatoren vom Typ :

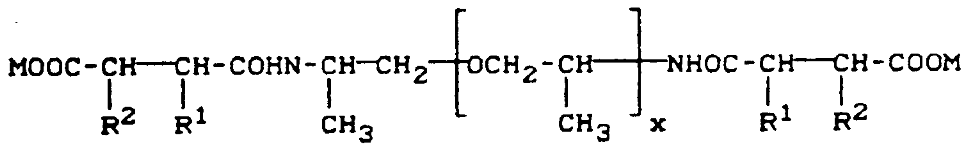

für M = $Na^+$ und x = 6 ; 16 ; 29,8 ; 57,3
anhand der Monomeren Styrol, Butylacrylat, Ethylacrylat, Vinylacetat, Vinylpropionat verglichen.

Es wird nach folgender Rezeptur angesetzt :

69,7 g 5%ige Emulgatorlösung
95,9 g entionisiertes Wasser
15,4 g Natriumcarbonatlösung, 1%ig
26,1 g Kaliumperoxodisulfatlösung, 1%ig 87,1 g Monomeres

Die Mischungen werden in Glasgefäßen in thermostatisierten Bädern unter Inertgas (Stickstoff oder Argon) geschüttelt oder gerührt. Polymerisationstemperatur : 70°C ; Zeit : 15 Stunden.

In Tabelle II sind die Polymerisationsergebnisse für die verschiedenen Monomeren zusammengestellt :

In Spalte 1 wird der verwendete Emulgatortyp nach dem vorstehenden Beispiel angegeben, in Spalte 2 das verwendete Monomere, in Spalte 3 der nephelometrisch bestimmte Teilchendurchmesser (in nm), wobei dieser etwa dem Teilchendurchmesser nach dem Volumenmittel, DAV, entspricht, in Spalte 4 der Feststoffgehalt des Latex, in Spalte 5 die Koagulatmenge in g ermittelt nach Filtration der Latices durch ein Sieb der quadratischen Maschenweite von 50 Mikron.

Die Tabelle II zeigt die monomerenspezifische Wirkung der unterschiedlichen Emulgatoren, ferner die Abhängigkeit des mittleren Teilchendurchmessers von der Emulgatorstruktur.

Tabelle II (zu Beispiel 9)

| | | Teilchen-ø [nm] | Feststoffgehalt [%] | Koagulat [g] |
|---|---|---|---|---|
| x = 6 in Formel I vergl. Bsp. 3 | Styrol (S) | 480 | 29,6 | 3,2 |
| | n-Butylacrylat (AB) | 240 | 30,3 | 2,5 |
| | Ethylacrylat (Ea) | 440 | 29,9 | 8,2 |
| | Vinylacetat (Vac) | 1500 | 12,3 | viel Koagulat |
| | Vinylpropionat (Vp) | - | 12,4 | viel Koagulat |
| x = 16 in Formel I vgl. Bsp. 5 | S | 190 | 30,7 | < 0,1 |
| | AB | 100 | 30,7 | 0,6 |
| | Ea | 110 | 30,6 | 0,4 |
| | Vac | 300 | 20,3 | viel Koagulat |
| | Vp | - | - | koaguliert |
| x = 29,8 in Formel I vgl. Bsp. 2 | S | 160 | 30,2 | < 0,1 |
| | AB | 90 | 30,6 | 0,6 |
| | Ea | 90 | 30,6 | 0,5 |
| | Vac | 180 | 30,7 | 2,2 |
| | Vp | 310 | 27,4 | koaguliert |
| x = 57,3 in Formel I vgl. Bsp. 4 | S | - | - | koaguliert |
| | AB | 70 | 29,8 | 1,2 |
| | Ea | 90 | 30,8 | 0,6 |
| | Vac | 190 | 29,3 | 6,4 |
| | Vp | 110 | 28,6 | 9,9 |

## Ansprüche

1. Sulfosuccinamidsäuren und ihre Salze der allgemeinen Formel

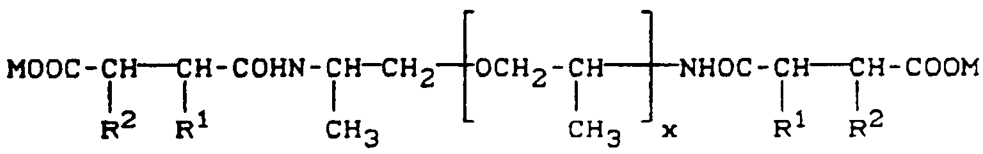

(I)

in der

x für eine Zahl von 5-60, vorzugsweise 20-40,

M für Wasserstoff, ein Alkalimetall, eine Ammonium-, $C_1$-$C_4$-Alkylammonium- oder $C_2$-$C_3$-Hydroxyalkylammonium-Gruppe und von den Resten

$R^1$ und $R^2$ der eine für Wasserstoff, der andere für $-SO_3M$ stehen.

2. Verwendung der Verbindungen der Formel (I) als Tenside und Emulgatoren in wäßrigen Systemen sowie zur Emulsionspolymerisation radikalisch polymerisierbarer Verbindungen.

## Revendications

1. Acides sulfosuccinamidiques et leurs sels de formule générale

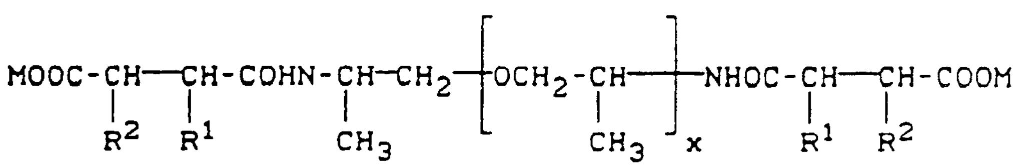

(I)

dans laquelle

x est un nombre de 5 à 60, de préférence 20 à 40,

M représente l'hydrogène, un métal alcalin, un groupe ammonium, (alkyle en $C_1$ à $C_4$)ammonium ou (hydroxyalkyle en $C_2$ ou $C_3$)ammonium ou l'un des restes $R^1$ et $R^2$ représente l'hydrogène et l'autre est un groupe $-SO_3M$.

2. Utilisation des composés de formule (I) comme agents tensio-actifs et émulsionnants dans des compositions aqueuses ainsi que pour la polymérisation en émulsion de composés polymérisables par voie radicalaire.

## Claims

1. Sulphosuccinamic acids and their salts corresponding to the general formula

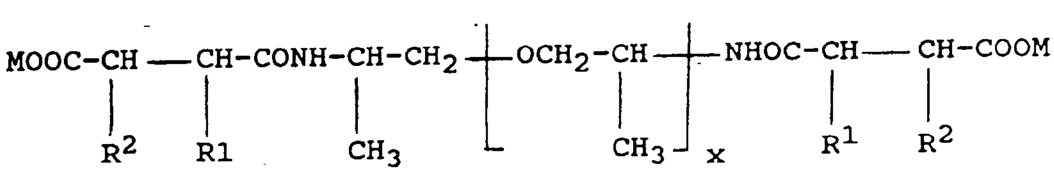

(I)

wherein x stands for a number from 5 to 60, preferably from 20 to 40,
M stands for hydrogen, an alkali metal, an ammonium group, a $C_1$-$C_4$-alkylammonium group or a $C_2$-$C_3$-hydroxyalkylammonium group, and of the groups $R^1$ and $R^2$, one stands for hydrogen and the other for $-SO_3M$.

2. Use of the compounds corresponding to formula (I) as surfactants and emulsifiers in aqueous systems and for the emulsion polymerisation of radically polymerisable compounds.